# FASCICULE DE BREVET EUROPEEN

(11) **EP 1 329 182 B1**
(45) Date de publication et mention de la délivrance du brevet: **09.05.2007**
(21) Numéro de dépôt: 03290004.5
(22) Date de dépôt: 02.01.2003
(51) Int. Cl.: A47J 43/07

(54) **Couteau rotatif pour appareil de préparation alimentaire et appareil équipé d'un tel couteau**
Rotierendes Messer für Gerät zum Herstellen von Nahrunsmitteln und Gerät mit einem solchen Messer
Rotating knife for apparatus for food preparation and apparatus with such a knife

(30) Priorité: 17.01.2002 FR 0200556
(43) Date de publication de la demande: 23.07.2003
(73) Titulaire: Electrolux Professionnel, 60300 Senlis (FR)
(72) Inventeur: Gamera, Daniel, 23200 Aubusson (FR); Descomps, Xavier, 23200 Blessac (FR)
(74) Mandataire: Jacobson, Claude

(56) Documents cités:
- BE-A- 532 423
- FR-A- 1 219 266
- FR-A- 1 272 273
- US-B1- 6 299 085

## Description

L'invention concerne un couteau rotatif pour appareil de préparation alimentaire, notamment un appareil de type cutter, mélangeur ou mixeur électrique.

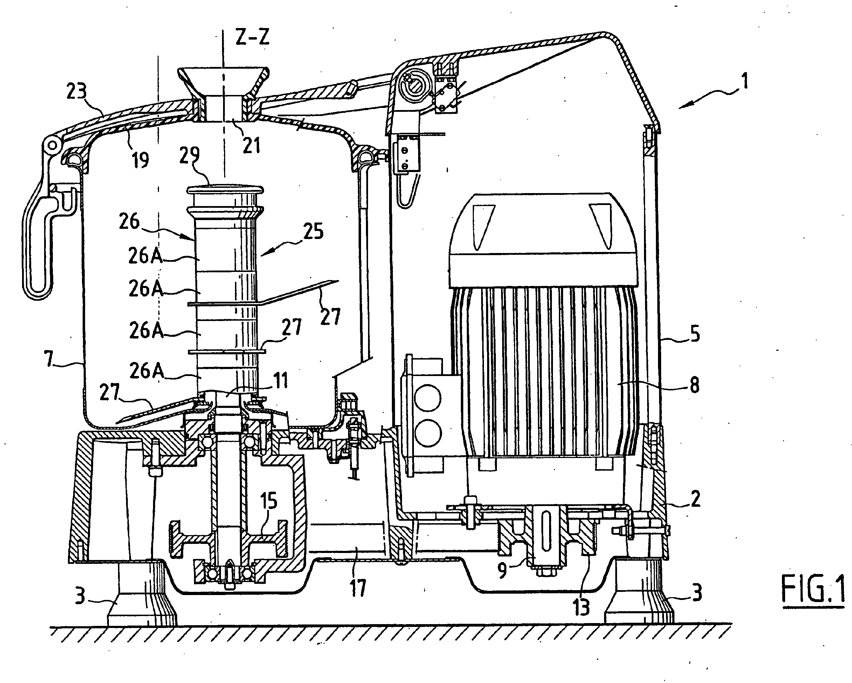

On a représenté sur la Figure 1 un tel appareil et un outil associé, de type connu, en particulier utilisés dans le domaine de la préparation alimentaire pour collectivités.

On pourra par exemple se reporter aux documents FR 1 272 273 et US 6 299 085 pour une illustration d'un tel état de la technique.

De façon classique, l'appareil 1 comporte essentiellement un socle ou embase 2 pouvant reposer sur une surface d'appui par l'intermédiaire de pieds 3, un carter de moteur 5, et une cuve de préparation 7.

Le carter-moteur contient un moteur électrique 8 fixé sur l'embase 2, l'arbre de sortie 9 étant relié mécaniquement à un arbre d'entraînement 11 faisant saillie verticalement de l'embase 2 et monté rotatif sur celle-ci. La liaison mécanique entre l'arbre de sortie 9 et l'arbre d'entraînement 11 est en général constituée d'une liaison à poulies 13, 15 et courroie 17, ces éléments mécaniques étant disposés à l'intérieur de l'embase 2.

La cuve de préparation 7 peut être fixée de façon détachable sur l'embase 2, et de façon à recevoir l'arbre d'entraînement 11 dans son volume intérieur. La cuve de préparation 7 est obturée au moins partiellement, de son côté supérieur, par un couvercle 19 à étanchéité périphérique, présentant une ouverture centrale 21 d'introduction de produits. Le couvercle 19 peut être appliqué et maintenu sur les bords périphériques de la cuve 7 avec une certaine pression propre à assurer l'étanchéité, au moyen d'une bride de pression 23.

Un outil 25, présentant la forme générale d'un manchon cylindre 26, est solidaire d'un arbre creux intérieur (non représenté) pourvu d'une forme d'entraînement intérieure complémentaire de la forme de l'arbre d'entraînement 11. L'outil 25 est monté de façon amovible et solidaire en rotation sur ledit arbre d'entraînement 11, par l'intermédiaire de l'arbre creux. L'outil 25 est pourvu de couteaux par exemple métalliques 27, ici représentés au nombre de trois, s'étendant radialement à partir du manchon cylindrique 26, et espacés axialement les uns des autres.

Le manchon 26 comprend ici plusieurs pièces d'entretoise 26A empilées sur l'arbre creux en maintenant rigidement les couteaux 27 et en les espaçant l'un par rapport à l'autre. Un capot de fermeture 29 forme un dispositif de verrouillage de l'ensemble sur l'arbre creux.

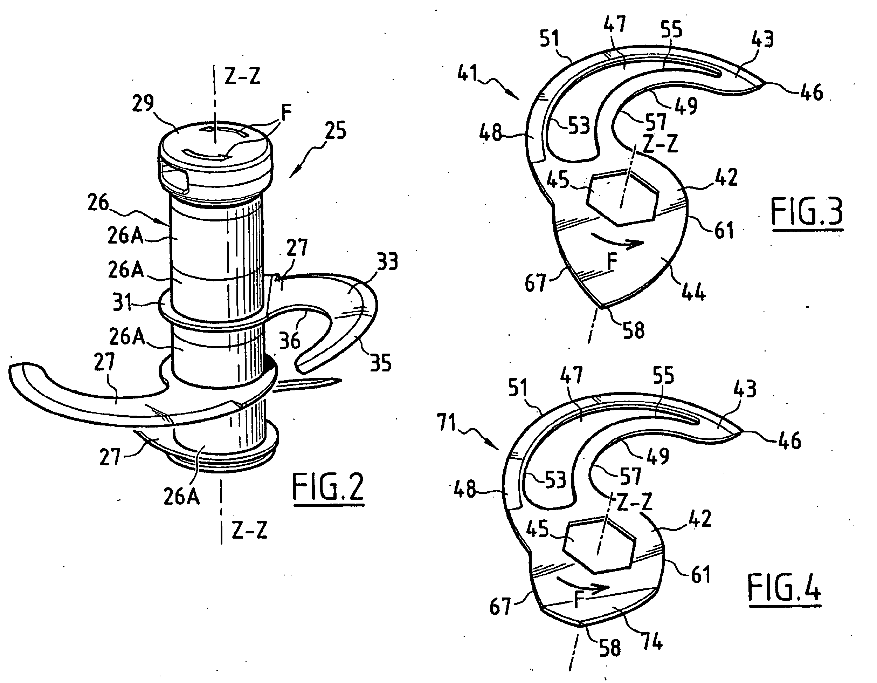

L'outil 25 est représenté seul, en perspective, sur la Figure 2. Sur cette Figure, on verra mieux que les couteaux 27 ont chacun une base 31 de forme générale de disque, qui constitue la partie de fixation sur le manchon 26. Chaque couteau 27 présente également une lame 33 constituant la partie de coupe. La lame 33 s'étend radialement à partir de la base 31 suivant une forme générale d'amorce de spirale.

Sur la Figure 2, le sens de rotation prévu pour l'outil 25 est indiqué par les flèches F. Suivant ce sens de rotation, il est possible de définir un bord d'attaque 35 et un bord de fuite 36 de la lame 33. De façon classique, le bord d'attaque 35 est, sur l'essentiel de sa longueur, effilé pour améliorer le tranchant de la lame 33.

Comme cela apparaît sur les Figures 1 et 2, les trois couteaux 27, qui sont décalés angulairement les uns par rapport aux autres, ont leurs lames 33 inclinées suivant des angles qui peuvent être différents par rapport au plan de rotation défini par le plan de la base 31, lui-même contenu dans un plan orthogonal à l'axe de rotation Z-Z. Par exemple, la lame supérieure a une inclinaison positive, c'est-à-dire tournée vers l'extrémité libre de l'arbre, la lame intermédiaire a une inclinaison nulle, et la lame inférieure a une inclinaison négative. Ces inclinaisons peuvent permettre d'améliorer l'effet de mélange des produits dans la cuve 7, en générant un flux ascendant des matières traitées dans la cuve.

Afin d'améliorer encore les performances de mélange de l'appareil, et par conséquent l'homogénéité du produit après traitement, ainsi que la finesse du broyage, il a déjà été proposé d'ajourer la lame au moyen d'une multitude de trous de petites dimensions.

L'invention vise plus particulièrement un couteau comportant une lame radiale principale qui présente un premier bord d'attaque, dans laquelle est formé un évidement traversant, ledit évidement définissant un passage de produit au travers de la lame lorsque ladite lame est entraînée en rotation.

La disposition consistant à prévoir une multitude de petites ouvertures dans la lame, ne donne pas entière satisfaction, du fait que l'effet de recirculation ascendant au travers de la lame n'est efficace que pour certains types de matières traitées, et pour certaines vitesses de rotation, à l'exclusion des vitesses élevées. En outre, dans ces conditions, les bords définis par les petites ouvertures n'ont quasiment aucun effet de cisaillement sur les matières traitées.

L'invention vise notamment à résoudre les problèmes précités, et à proposer un couteau du type défini ci-dessus, procurant une efficacité de coupe améliorée à puissance mécanique absorbée égale, permettant une rapidité accrue des préparations, et apportant un effet de mélange des matières traitées dans la cuve, quelles que soient ces matières et quelles que soit la vitesse de rotation de l'outil.

A cet effet, un couteau conforme à l'invention est tel que, définit par la revendication 1.

Suivant d'autres caractéristiques de l'invention , prises seules ou selon toutes les combinaisons techniquement envisageables sans sortir des limites définies par la revendication 1:
- lesdits premier et deuxième bords d'attaque sont essentiellement convexes ;
- l'évidement définit un premier bord de fuite associé au premier bord d'attaque, tandis qu'un deuxième bord de fuite associé au deuxième bord d'attaque délimite avec le premier bord d'attaque le contour extérieur de la lame, et les premier et deuxième bords de fuite sont essentiellement concaves ;
- le deuxième bord d'attaque est effilé ;
- le couteau présente une forme d'entraînement à partir de laquelle s'étend radialement la lame principale, et il comporte une lame secondaire s'étendant radialement à partir de ladite forme d'entraînement, ladite lame secondaire étant de longueur sensiblement inférieure à celle de la lame principale ;
- la lame secondaire présente un bord d'attaque et un bord de fuite convexes ;
- la lame secondaire présente un bord d'attaque effilé ; et
- le plan général de la lame secondaire est incliné par rapport au plan de rotation défini par la forme d'entraînement.

L'invention vise également un outil destiné à être monté sur l'arbre d'entraînement d'un appareil de préparation alimentaire comprenant au moins un couteau tel que décrit précédemment.

L'invention vise enfin un appareil de préparation alimentaire comportant un couteau ou un outil, tels que décrits précédemment.

L'invention va maintenant être décrite plus en détail en se référant aux dessins annexés sur lesquels :
- la Figure 3 est une vue en perspective d'un couteau seul suivant un premier mode de réalisation ;
- la Figure 4 est une vue analogue correspondant à un deuxième mode de réalisation de l'invention ;
- la Figure 5 est une vue analogue correspondant à un troisième mode de réalisation de l'invention ; et
- la Figure 6 est une vue analogue correspondant à un quatrième mode de réalisation de l'invention.

Sur la Figure 3, on a représenté un couteau 41 conforme à un premier mode de réalisation de l'invention, ce couteau comprenant essentiellement une base 42, une lame principale 43, et une lame secondaire 44, toutes les trois contenues essentiellement dans un même plan.

La base 42, constituée d'une plaque dans une partie centrale de laquelle est ménagée une forme d'entraînement 45, définit une partie de solidarisation en rotation du couteau 41 à l'arbre d'entraînement 11, par l'intermédiaire de l'arbre creux et de la forme d'entraînement 45. A partir de la base 42, font saillie essentiellement radialement la lame principale 43 et la lame secondaire 44.

La lame principale 43, dans l'exemple représenté, a une forme générale d'amorce de spirale, et présente une largeur (définie dans le plan de la lame) allant en diminuant depuis sa partie de transition avec la base 42 jusqu'à sa pointe 46 en extrémité libre. Sur l'essentiel de la surface de la lame principale 43, est formé un évidement traversant 47, de sorte que la lame est délimitée par la base 42 d'une part, et par deux bandes de matière 48, 49 se rejoignant à la pointe 46 d'autre part.

La première bande 48 définit, en considérant le sens F de rotation prévu pour le couteau 41, un premier bord d'attaque 51 et un premier bord de fuite 53, tandis que la deuxième bande de matière 49 définit un deuxième bord d'attaque 55 et un deuxième bord de fuite 57. Ainsi, le premier bord d'attaque 51 et le deuxième bord de fuite 57 délimitent avec la base 42 les contours extérieurs de la lame principale 43, tandis que le premier bord de fuite 53 et le deuxième bord d'attaque 55 délimitent avec la base 42 les contours de l'évidement 47.

Puisque l'évidement 47 s'étend sur l'essentiel de la surface de la lame principale 43, la longueur du deuxième bord d'attaque 55 est du même ordre de grandeur que la longueur du premier bord d'attaque 51. Cette notion de « même ordre » peut dans ce cas être définie à partir du rapport des longueurs d'arc des deux bords d'attaque 51, 55, ce rapport étant compris comme la longueur la plus faible rapportée à la longueur la plus grande. On peut alors définir que les deux longueurs sont du même ordre si ce rapport est compris entre 0,2 et 1. De préférence, ce rapport sera choisi entre 0,5 et 1.

Dans ce premier mode de réalisation, le premier bord d'attaque 51 est effilé, de la même façon que le bord d'attaque 35 de la lame 33 représentée à la Figure 2. En revanche, la deuxième bande 49 est d'épaisseur constante, le deuxième bord d'attaque 55 n'étant, lui, pas effilé.

Comme on le voit sur la Figure, la lame principale 43 a une convexité tournée dans le sens de rotation F prévu pour le couteau 41, à savoir que les bords d'attaque 51, 55 sont essentiellement convexes, et que les bords de fuite 53, 57 sont essentiellement concaves.

On comprend que l'évidement 47 constitue un passage de circulation des matières à traiter, et qu'il permet, du fait de la séparation, en certaines sections de la lame, du premier bord de fuite 53 et du deuxième bord d'attaque 55, que les matière soient traitées en cisaillement par le premier bord d'attaque 51, puis par le deuxième bord d'attaque 55. Le flux de matières créé par le mouvement de la lame, peut ainsi avoir un incidence successivement sur les bords d'attaque 51, 55, et par conséquent être traité consécutivement par les deux bandes 48, 49.

La lame secondaire 44, qui fait saillie radialement de la base 42 dans une région sensiblement opposée à la région de la lame principale 43, présente une forme extérieure générale d'ogive. La lame secondaire 44 est sensiblement plus courte que la lame principale 43 dans la mesure où son bord d'attaque 61, respectivement son bord de fuite 67, a une plus faible longueur d'arc que le premier bord d'attaque 51, respectivement que le deuxième bord de fuite 57, de la lame principale 43. La pointe 58 de la lame secondaire 44 est distante de l'axe Z-Z de la forme d'entraînement 45 d'une longueur supérieure à la distance séparant l'axe de la forme d'entraînement 45 et la pointe 46 de la lame principale 43. Contrairement à la lame principale 43, la lame secondaire 44 est essentiellement pleine. La fonction essentielle de la lame secondaire 44 est la mise en mouvement des matières contenues dans la cuve de mélange 7, de façon à en assurer la circulation et le mélange.

La configuration du couteau de la Figure 3 est particulièrement adaptée au pétrissage de pâtes à forte viscosité, du type pâtes à pain.

Le couteau 71 représenté à la Figure 4, conformément à un deuxième mode de réalisation de l'invention, diffère du couteau 41 de la Figure 3 essentiellement en ce que le plan général de la lame secondaire 74 est incliné par rapport au plan de rotation défini par la forme d'entraînement 45, c'est-à-dire, dans l'exemple représenté, le plan contenant la base 42 et la lame principale 43. Un intérêt de cette disposition est d'assurer un effet de recirculation des matières plus important qu'avec la lame du type précédent, en augmentant l'incidence du flux de matières sur la lame secondaire 74.

La configuration qui vient d'être décrite s'applique plus particulièrement à la préparation de crèmes, telles qu'utilisées en pâtisserie.

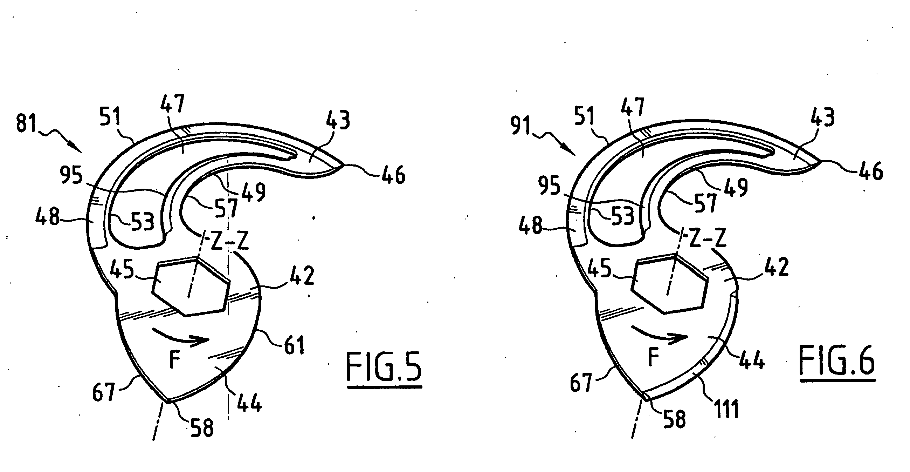

Dans le mode de réalisation de la Figure 5, le couteau 81 diffère du couteau 41 de la Figure 3 par le fait de prévoir le deuxième bord d'attaque 95 effilé, de façon à améliorer les propriétés de coupe de la deuxième bande de matière 49.

Sur la Figure 6, on a représenté un couteau 91 suivant un quatrième mode de réalisation de l'invention, dans lequel le bord d'attaque 111 de la lame secondaire 94 est également effilé, de façon à donner à la lame secondaire 44, essentiellement prévue pour assurer un effet de mélange, des propriétés améliorées de cisaillement des matières à traiter.

Les couteaux des Figures 5 et 6 conviennent particulièrement bien au traitement de viandes, ou plus généralement d'aliments solides.

On comprend qu'à partir des quatre modes préférés de réalisation de l'invention illustrés par les Figures, on peut définir plusieurs variantes de l'invention comme définie dans les revendications sans en quitter le cadre, en dotant le couteau de nombres différents de bords tranchants, répartis suivant des combinaisons différentes, et en dotant les lames du couteau d'inclinaisons différentes.

L'invention qui vient d'être décrite permet, comme cela a déjà été évoqué précédemment, d'augmenter le nombre des parties actives vis-à-vis du nombre des parties passives du couteau, les parties passives étant définies comme les parties dénuées d'effet de cisaillement pour les matières à traiter.

Sans augmenter la vitesse de rotation des lames, et par conséquent sans créer d'échauffement supplémentaire du produit à traiter, on peut obtenir grâce à l'invention, un broyage plus fin et plus homogène.

En outre, l'évidement tel que pratiqué dans la lame principale permet de diminuer les vibrations de l'outil dues au couteau, sans augmenter la masse totale et la surface de frottement totale du couteau.

## Revendications

1. Couteau rotatif pour appareil de préparation alimentaire comportant une lame radiale principale (43) qui présente un premier bord d'attaque (51), dans laquelle est formée un évidement (47) traversant, ledit évidement (47) définissant un passage de produit au travers de la lame (43) lorsque ladite lame est entraînée en rotation, l'évidement (47) définissant un deuxième bord d'attaque de lame (55 ; 95) dont la longueur est du même ordre que celle du premier bord d'attaque (51), **caractérisé en ce que** lesdits premier (51) et deuxième bords (55 ; 95) d'attaque sont essentiellement convexes, et **en ce que** l'évidement (47) définit un premier bord de fuite (53) associé au premier bord d'attaque (51), tandis qu'un deuxième bord de fuite (57) associé au deuxième bord d'attaque (55; 95) délimite avec le premier bord d'attaque (51) le contour extérieur de la lame (43), et les premier (53) et deuxième (57) bords de fuite sont essentiellement concaves.

2. Couteau suivant la revendication 1, **caractérisé en ce que** le deuxième bord d'attaque (95) est effilé.

3. Couteau suivant la revendication 1 ou 2, **caractérisé en ce qu**'il présente une forme d'entraînement (45) à partir de laquelle s'étend radialement la lame principale (43), et il comporte une lame secondaire (44 ;74) s'étendant radialement à partir de ladite forme d'entraînement (45), ladite lame secondaire (44 ;74) étant de longueur sensiblement inférieure à celle de la lame principale (43).

4. Couteau suivant la revendication 3, **caractérisé en ce que** la lame secondaire (44 ; 74) présente un bord d'attaque (61 ; 111) et un bord de fuite (67) convexes.

5. Couteau suivant la revendication 3 ou 4, **caractérisé en ce que** la lame secondaire (44) présente un bord d'attaque (111) effilé.

6. Couteau suivant l'une quelconque des revendications 3 à 5, **caractérisé en ce que** le plan général de la lame secondaire (74) est incliné par rapport au plan de rotation défini par la forme d'entraînement (45).

7. Outil destiné à être monté sur l'arbre d'entraînement d'un appareil de préparation alimentaire, comportant au moins un couteau (41 ; 71; 81 ; 91) suivant l'une quelconque des revendications 1 à 6.

8. Appareil de préparation alimentaire comportant un couteau (41 ;71 ; 81 ;91) selon l'une quelconque des revendications 1 à 6, ou un outil suivant la revendication 7.

## Claims

1. Rotating knife for apparatus for food preparation that includes a principal radial blade (43) that has a first leading edge (51) in which a through-aperture (47) is formed, said aperture (47) defining a passage for product through the blade (43) when said blade is driven in rotation, the aperture (47) defining a second blade leading edge (55; 95), the length of which is of the same order as that of the first leading edge (51), **characterized in that** said first (51) and second (55; 95) leading edges are essentially convex, and **in that** the aperture (47) defines a first trailing edge (53) associated with the first leading edge (51), whilst a second trailing edge (57) associated with the second leading edge (55; 95) delimits, together with the first leading edge (51), the outer contour of the blade (43), and the first (53) and second (57) trailing edges are essentially concave.

2. Knife according to Claim 1, **characterized in that** the second leading edge (95) is highly sharpened.

3. Knife according to Claim 1 or 2, **characterized in that** it has an entrainment form (45) from which the principal blade (43) extends radially and it has a secondary blade (44; 74) extending radially from said entrainment form (45), said secondary blade (44; 74) being substantially shorter than the principal blade (43).

4. Knife according to Claim 3, **characterized in that** the secondary blade (44; 74) has a leading edge (61; 111) and a trailing edge (67) that are convex.

5. Knife according to Claim 3 or 4, **characterized in that** the secondary blade (44) has a highly sharpened leading edge (111).

6. Knife according to any one of Claims 3 to 5, **characterized in that** the general plane of the secondary blade (74) is inclined relative to the rotation plane defined by the entrainment form (45).

7. Tool designed to be mounted on the drive shaft of an apparatus for food preparation, which includes at least one knife (41; 71; 81; 91) according to any one of Claims 1 to 6.

8. Apparatus for food preparation that includes a knife (41; 71; 81; 91) according to any one of Claims 1 to 6, or a tool according to Claim 7.

## Patentansprüche

1. Rotierendes Messer für ein Gerät zur Herstellung von Nahrungsmitteln, das eine radiale Hauptklinge (43) umfasst, die über eine erste Schneidkante (51) verfügt, in der eine durchgehende Aussparung (47) ausgebildet ist, die das Passieren des Produkts durch die Klinge (43) bestimmt, während diese angetrieben wird, wobei diese Aussparung (47) eine zweite Schneidkante der Klinge (55; 95) definiert, deren Länge der Größenordnung der ersten Schneidkante (51) entspricht, die **dadurch** bestimmt wird, dass diese erste (51) und die zweite Schneidkante (55; 95) im Wesentlichen konvex sind, und **dadurch**, dass die Aussparung (47) eine erste, zur ersten Schneidkante (51) zugehörige Hinterkante (53) definiert, während eine zweite (57), zur zweiten Schneidkante (55; 95) zugehörige Hinterkante mit der ersten Schneidkante (51) die äußere Kontur der Klinge (43) begrenzt und die erste (53) und die zweite (57) Hinterkante im Wesentlichen konkav sind.

2. Das Messer nach Anspruch 1 zeichnet sich **dadurch** aus, dass die zweite Schneidkante (95) angeschrägt ist.

3. Das Messer nach Anspruch 1 bzw. 2 zeichnet sich **dadurch** aus, dass es über eine Antriebsform (45) verfügt, von der aus, sich die Hauptklinge (43) in radialer Richtung erstreckt, und es eine Nebenklinge (44, 74) umfasst, die sich in radialer Richtung von dieser Antriebsform (45) aus erstreckt, wobei die Länge der Nebenklinge (44; 74) deutlich geringer als die der Hauptklinge (43) ist.

4. Das Messer nach Anspruch 3 zeichnet sich **dadurch** aus, dass die Nebenklinge (44; 74) über eine konvexe Schneidkante (61; 111) und eine konvexe Hinterkante (67) verfügt.

5. Das Messer nach Anspruch 3 bzw. 4 zeichnet sich **dadurch** aus, dass die Nebenklinge (44) über eine angeschrägte Schneidkante (111) verfügt.

6. Das Messer nach einem der Ansprüche 3 bis 5 zeichnet sich **dadurch** aus, dass die allgemeine Ebene der Nebenklinge (74) in Bezug auf die durch die Antriebsform (45) definierte Drehebene geneigt ist.

7. Ein für die Montage auf eine Antriebswelle eines Geräts für die Herstellung von Nahrungsmitteln vorgesehenes Werkzeug, das mindestens ein Messer (41; 71; 81; 91) nach einem der Ansprüche 1 bis 6 umfasst.

8. Ein Gerät zur Herstellung von Nahrungsmitteln, das ein Messer (41; 71; 81; 91) nach einem der Ansprüche 1 bis 6 umfasst, bzw. ein Werkzeug nach Anspruch 7.
